# EUROPEAN PATENT APPLICATION

(11) **EP 3 450 795 A1**
(43) Date of publication of application: **06.03.2019**
(21) Application number: 17789376.5
(22) Date of filing: 19.04.2017
(51) Int. Cl.: F16F 9/348, F16F 9/46

(54) **DAMPING FORCE REGULATING VALVE AND SHOCK ABSORBER**

(30) Priority: 27.04.2016 JP 2016088905
(71) Applicant: KYB Corporation, Tokyo 105-6111 (JP)
(72) Inventor: SAKUTA, Atsushi, Tokyo 105-6111 (JP)
(74) Representative: MFG Patentanwälte Meyer-Wildhagen Meggle-Freund Gerhard PartG mbB
(86) International application number: PCT/JP2017/015732
(87) International publication number: WO 2017/188091

(57) **Abstract**

A damping force-adjusting valve includes: a valve disc (11) that includes an annular inner peripheral seat portion (11f) on which a leaf valve (Vc) is stacked, an annular valve seat (11c) where the leaf valve (Vc) is separated/seated, and an annular window (11e) provided between the inner peripheral seat portion (11f) and the valve seat (11c); and a sustaining portion (70) that is provided between the inner peripheral seat portion (11f) and the valve seat (11c) and suppresses deformation of the leaf valve (Vc). An end of the sustaining portion (70) facing the leaf valve (Vc) more protrudes toward the leaf valve than an end of the valve seat (11c) facing the leaf valve when seen in an axial direction.

## Description

### Technical Field

The present invention relates to a damping force-adjusting valve and a shock absorber.

### Background Art

As a shock absorber used for the suspension of a vehicle, there is a shock absorber including a damping force-adjusting valve that can change a damping force.

Specifically, such a shock absorber includes a cylinder in which liquid is stored, a rod that is movably inserted into the cylinder, and a piston that is connected to one end of the rod and partitions an inner space of the cylinder into an extension-side chamber and a compression-side chamber. Further, a damping force-adjusting valve is realized on a piston part of the shock absorber. As disclosed in, for example, JP2015-72047 (A), the damping force-adjusting valve uses a piston, which includes a passage allowing the extension-side chamber and the compression-side chamber to communicate with each other, as a valve disc, and includes the valve disc, an annular leaf valve that is stacked on the valve disc and opens and closes the passage, a back pressure chamber that biases the leaf valve toward the piston, and an electromagnetic pressure control valve that can adjust the internal pressure of the back pressure chamber.

In such a shock absorber, the internal pressure of the back pressure chamber can be controlled by the electromagnetic pressure control valve to freely adjust damping forces of the shock absorber, which are generated at the time of the extension and contraction of the shock absorber, to a hard damping force from a soft damping force. Accordingly, an appropriate damping force can be exerted according to vibration that is input to the vehicle.

### Summary of the Invention

In a case where the shock absorber is to exert a soft damping force by the damping force-adjusting valve, the internal pressure of the back pressure chamber is reduced and the area of a flow passage is ensured by a small gap, which is formed between a valve seat formed on the outer peripheral side of the valve disc and the outer peripheral end of the leaf valve, so that a soft damping force is realized. In contrast, in a case where the shock absorber is to exert a hard damping force, the internal pressure of the back pressure chamber is increased to strongly push the leaf valve against the valve seat so that resistance to be applied to the flow of liquid passing through the passage is increased. Accordingly, since the leaf valve is biased by the internal pressure of the back pressure chamber, the valve-opening pressure of the damping force-adjusting valve is increased. As a result, a hard damping force is realized.

However, in a case where the damping force of the shock absorber is switched to a hard damping force from a soft damping force in such a damping force-adjusting valve, the leaf valve is vigorously seated on the valve seat due to the internal pressure of the backpressure chamber that suddenly rises . For this reason, there is a concern that abnormal noise maybe generated. Further, since the leaf valve is vigorously seated on the valve seat and a damping force is suddenly changed, there is a concern that the ride quality of a vehicle on which a shock absorber is mounted may deteriorate or abnormal noise caused by the vibration of a vehicle body may be generated.

In order to solve the problems, the invention provides a damping force-adjusting valve. The damping force-adjusting valve includes: a valve disc that includes an annular inner peripheral seat portion on which a leaf valve is stacked, an annular valve seat where the leaf valve is separated/seated, and an annular window provided between the inner peripheral seat portion and the valve seat; and a sustaining portion that is provided between the inner peripheral seat portion and the valve seat of the valve disc and suppresses deformation of the leaf valve. An end of the sustaining portion facing the leaf valve more protrudes toward the leaf valve than an end of the valve seat facing the leaf valve when seen in an axial direction.

### Brief Description of Drawings

Fig. 1 is a longitudinal sectional view of a shock absorber according to an embodiment.
Fig. 2 is an enlarged longitudinal sectional view of a damping force-adjusting valve that is applied to the shock absorber according to this embodiment.
Fig. 3 is a partially enlarged longitudinal sectional view of Fig. 1.

### Description of Embodiments

An embodiment will be described below with reference to the drawings. The same reference numerals given in several drawings denote the same components.

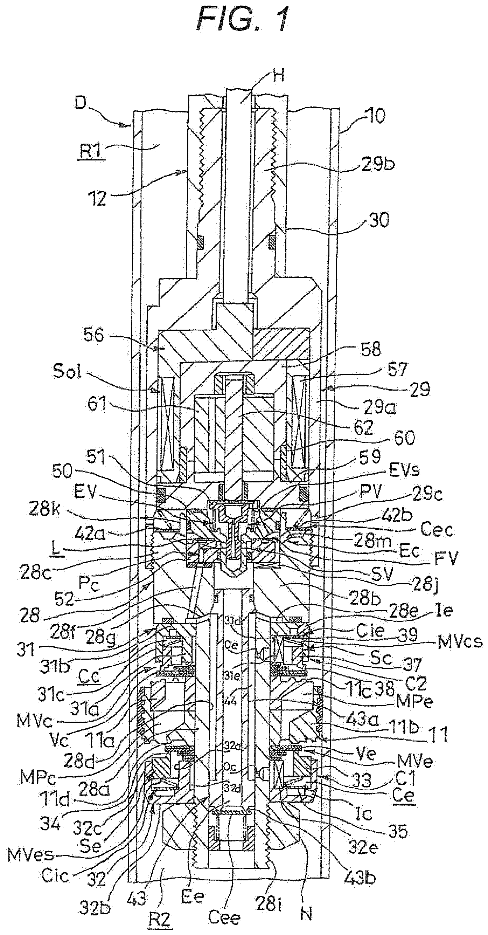

A shock absorber D according to this embodiment includes a cylinder 10 that is filled with liquid, such as hydraulic oil, a rod 12 that is movably inserted into the cylinder 10, and a piston 11 as an annular valve disc that is connected to one end of the rod 12 and partitions an inner space of the cylinder 10 into an extension-side chamber R1 and a compression-side chamber R2. Further, a damping force-adjusting valve V of this embodiment is realized on a piston part of the shock absorber D as illustrated in Fig. 1.

Furthermore, although not illustrated, a free piston is slidably inserted into a lower portion of the cylinder 10 in Fig. 1 and a gas chamber to be filled with gas is formed in the cylinder 10 below the compression-side chamber R2 in Fig. 1 by the free piston. Accordingly, in a case where the shock absorber D extends and contracts, the rod 12 is moved into and out of the cylinder 10, and the total volume of the extension-side chamber R1 and the compression-side chamber R2 is changed, the free piston is moved up and down in the cylinder 10 and increases or reduces the volume of the gas chamber to compensate the volume of the rod 12 that is moved into and out of the cylinder 10. Meanwhile, the shock absorber D is formed as a single-cylinder shock absorber in this embodiment, but may be formed as a multi-cylinder shock absorber that is provided with an outer cylinder receiving the cylinder 10 instead of the gas chamber, uses a space formed between the outer cylinder and the cylinder 10 as a reservoir, and compensates the volume of a rod, which is moved into and out of the cylinder 10, by the reservoir.

The damping force-adjusting valve V includes: the piston 11 as a valve disc that includes extension-side passages MPe and compression-side passages MPc, which are passages allowing the extension-side chamber R1 and the compression-side chamber R2 to communicate with each other; an extension-side valve structure MVe that includes an extension-side leaf valve Ve, which is stacked in the piston 11 and opens and closes the outlet ends of the extension-side passages MPe, and an extension-side back pressure chamber Ce, which biases the extension-side leaf valve Ve toward the piston with internal pressure; a compression-side valve structure MVc that includes a compression-side leaf valve Vc, which is stacked in the piston 11 and opens and closes the outlet ends of the compression-side passages MPc, and a compression-side back pressure chamber Cc, which biases the compression-side leaf valve Vc toward the piston 11 with internal pressure; a diaphragm; an adjustment passage Pc that communicates with both the back pressure chambers Cc and Ce and includes an electromagnetic valve EV, which controls the internal pressure of the back pressure chambers Cc and Ce and is provided in the middle of the adjustment passage Pc; a compression-side pressure discharge passage Ec that allows the downstream portion of the adjustment passage Pc to communicate with the extension-side chamber R1 and allows only the flow of hydraulic oil toward the extension-side chamber R1 from the adjustment passage Pc; an extension-side pressure discharge passage Ee that allows the downstream portion of the adjustment passage Pc to communicate with the compression-side chamber R2 and allows only the flow of hydraulic oil toward the compression-side chamber R2 from the adjustment passage Pc; a fail passage FP; and a fail valve FV that is formed of a relief valve provided on the fail passage FP.

Further, when the piston 11 is moved with respect to the cylinder 10 in an axial direction as an up-down direction in Fig. 1, resistance is applied to the flow of hydraulic oil, which passes through the extension-side passages MPe provided in the piston 11, by the extension-side leaf valve Ve and resistance is applied to the flow of hydraulic oil, which passes through the compression-side leaf valve Vc provided in the piston 11, by the compression-side valve structure MVc. As a result, the shock absorber D is adapted to exert a damping force.

The damping force-adjusting valve V and the shock absorber D will be described in detail below. In this case, the rod 12 includes: a holding member 28 that holds the piston 11; an electromagnetic valve-receiving cylinder 29 of which one end is connected to the holding member 28 and which forms a hollow receiving portion L, which receives the electromagnetic valve EV, together with the holding member 28; and a rod body 30 of which one end is connected to the electromagnetic valve-receiving cylinder 29 and the other end protrudes outward from the upper end of the cylinder 10.

The holding member 28 includes a holding shaft 28a which the annular piston 11 is mounted on the outer periphery thereof, a flange 28b that is provided on the outer periphery of the upper end of the holding shaft 28a in Fig. 1, and a cylindrical socket 28c that is provided on the outer periphery of the upper end of the flange 28b in Fig. 1. Further, the holding member 28 includes: a longitudinal hole 28d that is opened from the tip of the holding shaft 28a, extends in the axial direction, and communicates with the socket 28c; an annular groove 28e that is provided at the lower end of the flange 28b in Fig. 1 so as to surround the holding shaft 28a; a port 28f that allows the annular groove 28e to communicate with the socket 28c; a lateral hole 28g that allows the annular groove 28e to communicate with the longitudinal hole 28d; an extension-side pilot orifice Oe and a compression-side pilot orifice Oc that are opened from the outer periphery of the holding shaft 28a and communicate with the longitudinal hole 28d; a screw portion 28i that is provided on the outer periphery of the lower end of the holding shaft 28a in Fig. 1; and a groove 28j that is formed at the upper end of the flange 28b and communicates with the longitudinal hole 28d. In this example, the diaphragm includes the above-mentioned extension-side pilot orifice Oe and the above-mentioned compression-side pilot orifice Oc.

A separator 43 is inserted into the longitudinal hole 28d provided in the holding shaft 28a. The separator 43 has a cylindrical shape and forms a communication passage 44, which allows the extension-side pilot orifice Oe and the compression-side pilot orifice Oc to communicate with the longitudinal hole 28d, by an annular groove 43a provided on the outer periphery thereof. An annular valve seat 43b, which surrounds an opening of the lower end of the separator 43, is provided at the lower end of the separator 43 in Fig. 1. The longitudinal hole 28d allows the compression-side chamber R2 to communicate with the socket 28c through the inner space of the separator 43, but the extension-side pilot orifice Oe and the compression-side pilot orifice Oc are not allowed to communicate with the compression-side chamber R2 and the socket 28c through the inner space of the longitudinal hole 28d by the separator 43. In addition, since the lateral hole 28g also communicates with the communication passage 44, the lateral hole 28g is also not allowed to communicate with the compression-side chamber R2 and the socket 28c through the inner spaces of the longitudinal hole 28d by the separator 43.

Meanwhile, since the above-mentioned extension-side pilot orifice Oe and the above-mentioned compression-side pilot orifice Oc have only to apply resistance to the flow of hydraulic oil passing therethrough, another diaphragm, which includes choke passages instead of the orifices, may be used.

An annular recessed portion 28k is provided on the outer periphery of the upper end of the socket 28c in Fig. 1, and the socket 28c is provided with a through-hole 28m that communicates with the socket 28c from the recessed portion 28k. An annular plate 42a is mounted on the recessed portion 28k, and the annular plate 42a is biased from the upper side in Fig. 1 by a spring member 42b and forms a check valve Cec that opens and closes the through-hole 28m.

The electromagnetic valve-receiving cylinder 29 includes a topped cylindrical receiving cylinder portion 29a, a cylindrical connecting portion 29b of which the outer diameter is smaller than the outer diameter of the receiving cylinder portion 29a and which extends upward in Fig. 1 from the top portion of the receiving cylinder portion 29a, and a through-hole 29c that is opened from the side portion of the receiving cylinder portion 29a and communicates with the receiving cylinder portion 29a. Further, in a case where the socket 28c of the holding member 28 is screwed to the inner periphery of the receiving cylinder portion 29a of the electromagnetic valve-receiving cylinder 29, the holding member 28 is integrated with the electromagnetic valve-receiving cylinder 29, the receiving portion L, in which the electromagnetic valve EV is received, is formed in the receiving cylinder portion 29a by the electromagnetic valve-receiving cylinder 29 and the holding member 28, and a part of the adjustment passage Pc to be described in detail later is provided in the receiving portion L. Further, the receiving portion L communicates with the communication passage 44 through the port 28f, the annular groove 28e, and the lateral hole 28g that are described above; and the port 28f, the annular groove 28e, the lateral hole 28g, and the communication passage 44 form an upper portion of the adjustment passage Pc. Meanwhile, since the receiving portion L has only to communicate with the communication passage 44, a passage, which directly communicates with the receiving portion L and the communication passage 44, may be provided without the use of the port 28f, the annular groove 28e, and the lateral hole 28g. However, there is an advantage that it is easy to machine a passage, which allows the receiving portion L employing the port 28f, the annular groove 28e, and the lateral hole 28g and the communication passage 44 to communicate with each other.

In a case where the holding member 28 is integrated with the electromagnetic valve-receiving cylinder 29 as described above, the through-hole 29c faces the recessed portion 28k and forms the compression-side pressure discharge passage Ec, which allows the receiving portion L to communicate with the extension-side chamber R1, together with the through-hole 28m. Accordingly, the check valve Cec, which allows only the flow of hydraulic oil toward the extension-side chamber R1 from the inner space of the receiving portion L, is formed by the annular plate 42a and the spring member 42b. Therefore, the compression-side pressure discharge passage Ec is formed by the through-hole 29c, the recessed portion 28k, and the through-hole 28m, and the check valve Cec is provided on the compression-side pressure discharge passage Ec.

Further, a check valve Cee, which is to be separated from/seated on the annular valve seat 43b provided at the lower end of the separator 43 in Fig. 1, is provided in the longitudinal hole 28d of the holding member 28; and the check valve Cee is adapted to block the flow of hydraulic oil toward the receiving portion L from the compression-side chamber R2, and to allow only the flow of hydraulic oil toward the compression-side chamber R2 from the receiving portion L. Accordingly, the extension-side pressure discharge passage Ee is formed in the longitudinal hole 28d by the separator 43.

The rod body 30 has a cylindrical shape, is increased in the diameter of the inner periphery of the lower end thereof in Fig. 1 so as to allow the insertion of the connecting portion 29b of the electromagnetic valve-receiving cylinder 29, and includes a screw portion (without reference numeral) that allows the connecting portion 29b to be screwed. In a case where the rod body 30, the electromagnetic valve-receiving cylinder 29, and the holding member 28 are integrated as described above, the rod 12 is formed.

Meanwhile, a harness H, which supplies power to a solenoid Sol for driving the electromagnetic valve EV, is inserted into the rod body 30 and the connecting portion 29b of the electromagnetic valve-receiving cylinder 29, and the upper end of the harness H extends upward from the upper end of the rod body 30 and is connected to a power supply although not illustrated.

As illustrated in Fig. 1, the extension-side valve structure MVe and the compression-side valve structure MVc are assembled on the outer periphery of the holding shaft 28a of the holding member 28 together with the annular piston 11, and these are mounted on the holding shaft 28a by a nut N.

The extension-side valve structure MVe includes the extension-side leaf valve Ve and an extension-side back pressure chamber-forming member C1 that forms the extension-side back pressure chamber Ce, and the compression-side valve structure MVc includes the compression-side leaf valve Vc and a compression-side back pressure chamber-forming member C2 that forms the compression-side back pressure chamber Cc. The extension-side back pressure chamber-forming member C1 includes an extension-side spool Se that biases the extension-side leaf valve Ve and an extension-side guide part 32 that guides the movement of the extension-side spool Se in the axial direction, and the compression-side back pressure chamber-forming member C2 includes a compression-side spool Sc that biases the compression-side leaf valve Vc and a compression-side guide part 31 that guides the movement of the compression-side leaf valve Vc in the axial direction.

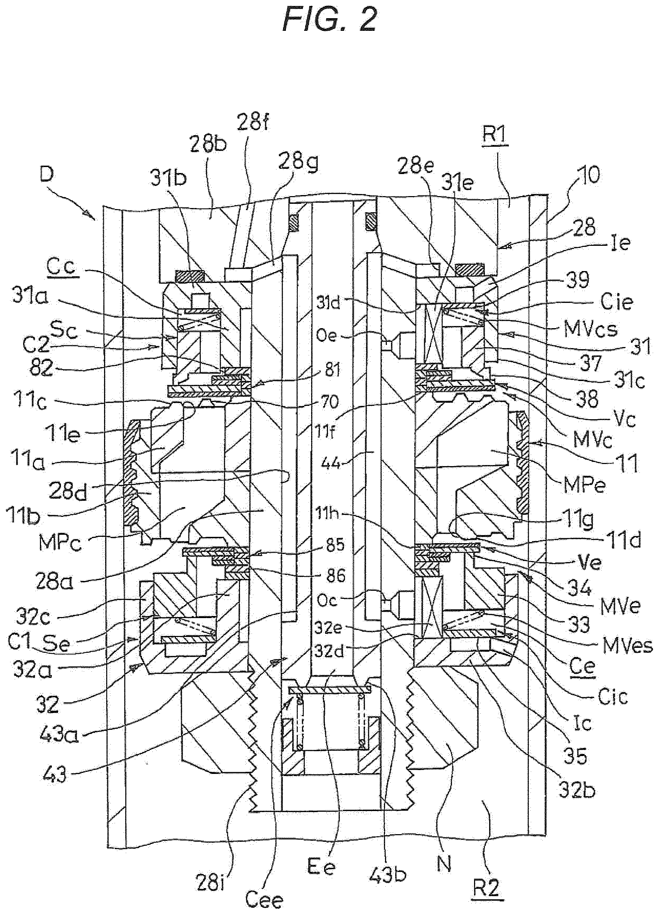

Specifically, a collar 81, which is formed of a plurality of stacked annular plates having a circular outer diameter, is assembled on the upper side of the piston 11 in Fig. 2, and the compression-side leaf valve Vc is mounted on the outer periphery of the collar 81. Further, an annular compression-side spacer 82, the compression-side spool Sc, and the compression-side guide part 31 are assembled in this order on the upper side of the collar 81. A collar 85, which is formed of a plurality of stacked annular plates having a circular outer diameter, is assembled on the lower side of the piston 11 in Fig. 2, and the extension-side leaf valve Ve is mounted on the outer periphery of the collar 85. Further, an annular extension-side spacer 86, the extension-side spool Se, and the extension-side guide part 32 are assembled in this order on the lower side of the collar 85.

In this case, the piston 11 is formed of upper and lower discs 11a and 11b that are divided and superimposed, and is provided with a plurality of extension-side passages MPe and a plurality of compression-side passages MPc that allow the extension-side chamber R1 and the compression-side chamber R2 to communicate with each other and are arranged in the circumferential direction. In a case where the piston 11 is formed of upper and lower discs 11a and 11b divided as described above, the extension-side passages MPe and the compression-side passages MPc having complicated shapes can be formed without drilling. Accordingly, the piston 11 can be easily manufactured at a low cost.

Further, an annular window 11e that communicates with the compression-side passages MPc, an annular compression-side valve seat 11c that is provided on the outer peripheral side of the annular window 11e and surrounds the compression-side passages MPc, and an inner peripheral seat portion 11f that is provided on the inner periphery of the annular window 11e are provided at the upper end of the upper disc 11a in Fig. 2. On the other hand, an annular window 11g that communicates with the extension-side passages MPe, an annular extension-side valve seat 11d that is provided on the outer peripheral side of the annular window 11g and surrounds the extension-side passages MPe, and an inner peripheral seat portion 11h that is provided on the inner periphery of the annular window 11g are provided at the lower end of the lower disc 11b.

Furthermore, a sustaining portion 70, which prevents the compression-side leaf valve Vc from being deformed and broken by the internal pressure of the compression-side back pressure chamber Cc, is provided between the respective compression-side passages MPc inside the annular window 11e that is provided at the upper portion of the piston 11 in Fig. 2.

The sustaining portions 70 are formed so as to protrude toward the compression-side leaf valve Vc, and the back surface of the compression-side leaf valve Vc is in contact with the sustaining portions 70 in a case where the compression-side leaf valve Vc is to be bent toward the piston 11 by the internal pressure of the compression-side back pressure chamber Cc. Accordingly, the sustaining portions 70 increase the stiffness of the compression-side leaf valve Vc. Therefore, the sustaining portions 70 prevent the breakage of the compression-side leaf valve Vc by suppressing the deformation of the compression-side leaf valve Vc.

Further, the sustaining portions 70 according to this embodiment are formed in the shape of a truncated cone, and are provided in the middle between the inner peripheral seat portion 11f and the compression-side valve seat 11c. For this reason, in this example, the plurality of sustaining portions 70 are provided in the middle between the inner peripheral seat portion 11f and the compression-side valve seat 11c, that is, at positions where the middle of a portion of the compression-side leaf valve Vc to be deformed is supported in a case where the compression-side leaf valve Vc is seated while receiving pressure.

Accordingly, since the sustaining portions 70 suppress the deformation of the compression-side leaf valve Vc by supporting portions of the compression-side leaf valve Vc of which the displacement is largest, the sustaining portions 70 are effective in preventing the breakage of the compression-side leaf valve Vc.

However, since the deformation of the compression-side leaf valve Vc is suppressed even though the sustaining portions 70 are not provided in the middle between the inner peripheral seat portion 11f and the compression-side valve seat 11c, the positions where the sustaining portions 70 are provided are not limited to the middle.

Meanwhile, the sustaining portions 70 according to this embodiment are formed in the shape of a truncated cone, but the shape of the sustaining portion 70 is not limited thereto. For example, the sustaining portions 70 may be formed in the shape of an arc along the circumferential direction of the annular window 11e. Since the contact area between the compression-side leaf valve Vc and the sustaining portions 70 can be increased in a case where the sustaining portions 70 are formed in the shape of an arc, the deformation of the leaf valve at the time of seating of the leaf valve can be further prevented in comparison with a case where the sustaining portions 70 are formed in the shape of a truncated cone.

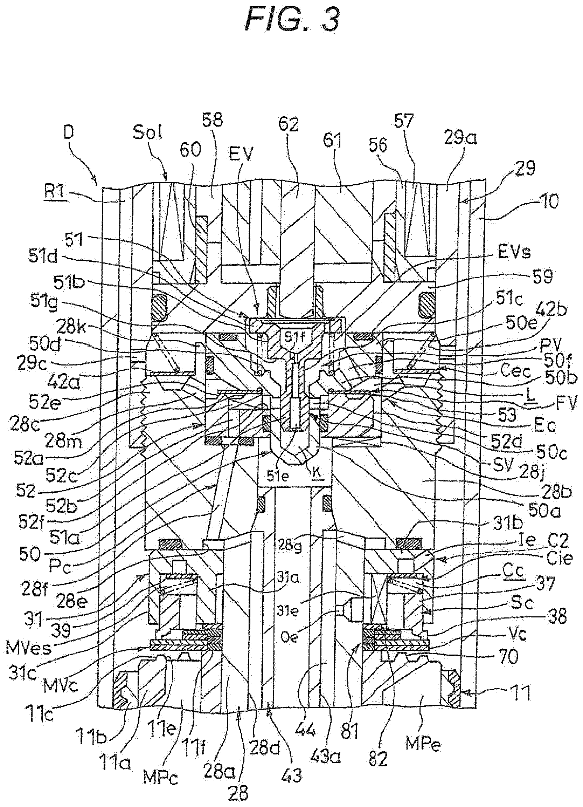

Further, the sustaining portion 70 is set to more protrude toward the compression-side leaf valve Vc, which is positioned on the upper side in Figs. 2 and 3, than an end of the compression-side valve seat 11c facing the compression-side leaf valve Vc when seen in the axial direction; and the height of the sustaining portion 70 in the axial direction is set to be smaller than the height of the inner peripheral seat portion 11f in the axial direction. That is, in the piston 11 according to this embodiment, a height in the axial direction is reduced in the order of the inner peripheral seat portion 11f, the sustaining portion 70, and the compression-side valve seat 11c.

As illustrated in Fig. 2, the extension-side leaf valve Ve is formed in an annular shape to allow the insertion of the holding shaft 28a of the holding member 28 and is formed of a plurality of stacked annular plates in this example. However, the extension-side leaf valve Ve may be formed of one annular plate. Further, the extension-side leaf valve Ve having this structure is stacked on the inner peripheral seat portion 11h of the piston 11 and is stacked on the lower side of the piston 11 in Fig. 2. Furthermore, the extension-side spacer 86, which has an annular shape, has an outer diameter set to be larger than the inner diameter of the extension-side leaf valve Ve, and presses the inner peripheral portion of the extension-side leaf valve Ve, is provided on the lower side of the collar 85 in Fig. 2, and the extension-side guide part 32 as the extension-side back pressure chamber-forming member C1 is stacked on the lower side of the extension-side spacer 86. Accordingly, the inner periphery of the extension-side leaf valve Ve is supported by the extension-side spacer 86, and the outer peripheral portion of the extension-side leaf valve Ve is allowed to be bent.

Further, since the height of the inner peripheral seat portion 11h is set to be larger than the height of the extension-side valve seat 11d as illustrated in Fig. 2, a gap is formed between the extension-side leaf valve Ve and the extension-side valve seat 11d in a state in which a load does not act on the extension-side leaf valve Ve.

Meanwhile, to form the gap, an annular spacer may be provided between the inner peripheral seat portion 11h and the extension-side leaf valve Ve to form a gap between the extension-side leaf valve Ve and the extension-side valve seat 11d. In this case, the length of the gap in the up-down direction in Fig. 2 can be adjusted by the exchange of spacers having different thicknesses or a change in the number of spacers to be stacked.

Further, in a case where a biasing force caused by the pressure of the extension-side back pressure chamber Ce is applied to the extension-side leaf valve Ve from the back side, that is, the side opposite to the piston, the extension-side leaf valve Ve is bent and is pushed against and seated on the extension-side valve seat 11d. Accordingly, since the outer peripheral portion of the extension-side leaf valve Ve is allowed to be bent as described above, the extension-side leaf valve Ve can open and close the extension-side passages MPe.

The extension-side guide part 32 includes a cylindrical mounting portion 32a that is fitted to the outer periphery of the holding shaft 28a of the holding member 28, a flange portion 32b that is provided on the outer periphery of the lower end of the mounting portion 32a in Fig. 2, a sliding-contact cylinder 32c that extends toward the piston 11 from the outer periphery of the flange portion 32b, an annular groove 32d that is provided on the inner periphery of the mounting portion 32a, and a notch 32e that communicates with the annular groove 32d from the outer periphery of the mounting portion 32a. Further, in a case where the extension-side guide part 32 is assembled on the holding shaft 28a, the annular groove 32d faces the compression-side pilot orifice Oc provided in the holding shaft 28a.

Meanwhile, the extension-side spacer 86 is interposed between the mounting portion 32a of the extension-side guide part 32 and the extension-side leaf valve Ve, but may be removed so that the inner periphery of the extension-side leaf valve Ve is directly pressed by the mounting portion 32a. However, in a case where the extension-side guide part 32 needs to be adjusted to a position where the compression-side pilot orifice Oc and the annular groove 32d face each other when being assembled on the holding shaft 28a of the holding member 28, the position of the extension-side guide part 32 relative to the holding member 28 can be adjusted in a case where the extension-side spacer 86 is provided.

The extension-side spool Se is received in the sliding-contact cylinder 32c. Since the outer periphery of the extension-side spool Se is in sliding contact with the inner periphery of the sliding-contact cylinder 32c, the extension-side spool Se is adapted to be movable in the axial direction in the sliding-contact cylinder 32c. The extension-side spool Se includes an annular spool body 33 and an annular protrusion 34 that stands up from the inner periphery of the upper end of the spool body 33 in Fig. 2. Since the inner diameter of the annular protrusion 34 is set to be smaller than the outer diameter of the extension-side leaf valve Ve, the annular protrusion 34 is adapted to be capable of being in contact with the lower surface of the extension-side leaf valve Ve in Fig. 2, that is, the back surface of the extension-side leaf valve Ve.

Then, in a case where the extension-side spool Se is assembled with the extension-side guide part 32 and the extension-side guide part 32 is assembled on the holding shaft 28a as described above, the extension-side back pressure chamber Ce is formed in a chamber that is surrounded by the extension-side guide part 32, the extension-side spool Se, and the extension-side leaf valve Ve. Further, the inner diameter of the spool body 33 is set to be larger than the outer diameter of the mounting portion 32a, but the inner diameter of the spool body 33 may be set to a diameter allowing the spool body 33 to be in sliding contact with the outer periphery of the mounting portion 32a so that the extension-side back pressure chamber Ce can be sealed by the extension-side spool Se. In this case, the extension-side back pressure chamber Ce is formed in the chamber surrounded by the extension-side guide part 32 and the extension-side spool Se.

Meanwhile, the extension-side back pressure chamber-forming member C1 is not limited to the above-mentioned structure, and may employ any structure as long as the extension-side back pressure chamber Ce for biasing the extension-side leaf valve Ve from the back surface of the extension-side leaf valve Ve can be formed.

Further, the annular groove 32d is provided on the inner periphery of the mounting portion 32a of the extension-side guide part 32 and the notch 32e, which communicates with the annular groove 32d from the outer periphery of the mounting portion 32a, is provided. Accordingly, in a case where the extension-side guide part 32 is assembled on the holding shaft 28a, the annular groove 32d faces the compression-side pilot orifice Oc provided in the holding shaft 28a. As a result, the extension-side back pressure chamber Ce communicates with the compression-side pilot orifice Oc.

Furthermore, since the extension-side guide part 32 is provided with a compression-side pressure introduction passage Ic that is opened from the outer periphery of the flange portion 32b, the compression-side chamber R2 is allowed to communicate with the extension-side back pressure chamber Ce. An annular plate 35 is stacked on the upper end of the flange portion 32b of the extension-side guide part 32 in Fig. 2, and the annular plate 35 is pushed against the flange portion 32b by a spring MVes, which is interposed between the annular plate 35 and the spool body 33 of the extension-side spool Se, so as to close the compression-side pressure introduction passage Ic. Meanwhile, the compression-side pressure introduction passage Ic is adapted not to apply resistance to the flow of hydraulic oil passing therethrough.

In a case where the compression-side chamber R2 is compressed and pressure is increased at the time of the contraction operation of the shock absorber D, the annular plate 35 is pressed by the pressure, is separated from the flange portion 32b, and opens the compression-side pressure introduction passage Ic. Further, the annular plate 35 is pushed against the flange portion 32b and closes the compression-side pressure introduction passage Ic at the time of the extension operation of the shock absorber D where the internal pressure of the extension-side back pressure chamber Ce is higher than that of the compression-side chamber R2. Accordingly, the annular plate 35 functions as a check valve body of a check valve Cic that allows only the flow of hydraulic oil from the compression-side chamber R2. The compression-side pressure introduction passage Ic is set to a one-way passage, which allows only the flow of hydraulic oil toward the extension-side back pressure chamber Ce from the compression-side chamber R2, by the check valve Cic.

The spring MVes plays a role in pushing the annular plate 35 against the flange portion 32b, forms the check valve Cic together with the annular plate 35 functioning as the check valve body, and also plays a role in biasing the extension-side spool Se toward the extension-side leaf valve Ve. Even though the bending of the extension-side leaf valve Ve is canceled after the extension-side spool Se is in a state in which the extension-side leaf valve Ve is bent and the extension-side spool Se is away from the piston 11, that is, the extension-side spool Se is pushed down in Fig. 2, the extension-side spool Se immediately returns to the original position (the position illustrated in Fig. 2) while following the extension-side leaf valve Ve since the extension-side spool Se is biased by the spring MVes. The extension-side spool Se can also be biased by a separate spring member. However, in a case where the extension-side spool Se shares the spring MVes with the check valve Cic, there are advantages that the number of components can be reduced and a structure is simplified. Meanwhile, since the outer diameter of the extension-side spool Se is set to be larger than the inner diameter of the annular protrusion 34, the annular protrusion 34 is in contact with the extension-side leaf valve Ve. Accordingly, the extension-side spool Se is always biased toward the extension-side leaf valve Ve by the pressure of the extension-side back pressure chamber Ce.

As illustrated in Fig. 2, the compression-side leaf valve Vc, which is stacked on the upper side of the piston 11, is formed in an annular shape to allow the insertion of the holding shaft 28a of the holding member 28 as in the extension-side leaf valve Ve, and is formed of a plurality of stacked annular plates in this example. However, the compression-side leaf valve Vc may be formed of one annular plate. Further, the compression-side leaf valve Vc having this structure is stacked on the inner peripheral seat portion 11f of the piston 11 and is stacked on the upper side of the piston 11 in Fig. 2. Furthermore, the compression-side spacer 82, which has an annular shape, has an outer diameter set to be larger than the inner diameter of the compression-side leaf valve Vc, and presses the inner peripheral portion of the compression-side leaf valve Vc, is provided on the upper side of the collar 81 in Fig. 2, and the compression-side guide part 31 as the compression-side back pressure chamber-forming member C2 is stacked on the upper side of the compression-side spacer 82. Accordingly, the inner periphery of the compression-side leaf valve Vc is supported by the compression-side spacer 82, and the outer peripheral portion of the compression-side leaf valve Vc is allowed to be bent.

Further, since the height of the inner peripheral seat portion 11f is set to be larger than the height of the compression-side valve seat 11c as illustrated in Fig. 2, a gap is formed between the compression-side leaf valve Vc and the compression-side valve seat 11c in a state in which a load does not act on the compression-side leaf valve Vc.

Meanwhile, to form the gap, an annular spacer may be provided between the inner peripheral seat portion 11f and the compression-side leaf valve Vc to form a gap between the compression-side leaf valve Vc and the compression-side valve seat 11c. In this case, the length of the gap in the up-down direction in Fig. 2 can be adjusted by the exchange of spacers having different thicknesses or a change in the number of spacers to be stacked.

Further, in a case where a biasing force caused by the pressure of the compression-side back pressure chamber Cc is applied to the compression-side leaf valve from the back side, that is, the side opposite to the piston, the compression-side leaf valve Vc is bent and is pushed against and seated on the compression-side valve seat 11c. Accordingly, since the outer peripheral portion of the compression-side leaf valve Vc is allowed to be bent as described above, the compression-side leaf valve Vc can open and close the compression-side passages MPc.

The compression-side guide part 31 includes a cylindrical mounting portion 31a that is fitted to the outer periphery of the holding shaft 28a of the holding member 28, a flange portion 31b that is provided on the outer periphery of the upper end of the mounting portion 31a in Fig. 2, a sliding-contact cylinder 31c that extends toward the piston 11 from the outer periphery of the flange portion 31b, an annular groove 31d that is provided on the inner periphery of the mounting portion 31a, and a notch 31e that communicates with the annular groove 31d from the outer periphery of the mounting portion 31a. Further, in a case where the compression-side guide part 31 is assembled on the holding shaft 28a, the annular groove 31d faces the extension-side pilot orifice Oe provided in the holding shaft 28a.

Meanwhile, the compression-side spacer 82 is interposed between the mounting portion 31a of the compression-side guide part 31 and the compression-side leaf valve Vc, but may be removed so that the inner periphery of the compression-side leaf valve Vc is directly pressed by the mounting portion 31a. However, in a case where the compression-side guide part 31 needs to be adjusted to a position where the extension-side pilot orifice Oe and the annular groove 31d face each other when being assembled on the holding shaft 28a of the holding member 28, the position of the compression-side guide part 31 relative to the holding member 28 can be adjusted in a case where the compression-side spacer 82 is provided.

The compression-side spool Sc is received in the sliding-contact cylinder 31c. Since the outer periphery of the compression-side spool Sc is in sliding contact with the inner periphery of the sliding-contact cylinder 31c, the compression-side spool Sc is adapted to be movable in the axial direction in the sliding-contact cylinder 31c. The compression-side spool Sc includes an annular spool body 37 and an annular protrusion 38 that stands up from the outer periphery of the lower end of the spool body 37 in Fig. 2. Since the inner diameter of the annular protrusion 38 is set to be smaller than the outer diameter of the compression-side leaf valve Vc, the annular protrusion 38 is adapted to be capable of being in contact with the upper surface of the compression-side leaf valve Vc in Fig. 2, that is, the back surface of the compression-side leaf valve Vc.

Then, in a case where the compression-side spool Sc is assembled with the compression-side guide part 31 and the compression-side guide part 31 is assembled on the holding shaft 28a as described above, the compression-side back pressure chamber Cc is formed in a chamber that is surrounded by the compression-side guide part 31, the compression-side spool Sc, and the compression-side leaf valve Vc. Further, the inner diameter of the spool body 37 is set to be larger than the outer diameter of the mounting portion 31a, but the inner diameter of the spool body 37 may be set to a diameter allowing the spool body 37 to be in sliding contact with the outer periphery of the mounting portion 31a so that the compression-side back pressure chamber Cc is sealed by the compression-side spool Sc. In this case, the compression-side back pressure chamber Cc surrounded by the compression-side guide part 31 and the compression-side spool Sc is formed.

Meanwhile, the compression-side back pressure chamber-forming member C2 is not limited to the above-mentioned structure, and may employ any structure as long as the compression-side back pressure chamber Cc for biasing the compression-side leaf valve Vc from the back surface of the compression-side leaf valve Vc can be formed.

Further, the annular groove 31d is provided on the inner periphery of the mounting portion 31a of the compression-side guide part 31 and the notch 31e, which communicates with the annular groove 31d from the outer periphery of the mounting portion 31a, is provided. Accordingly, in a case where the compression-side guide part 31 is assembled on the holding shaft 28a, the annular groove 31d faces the extension-side pilot orifice Oe provided in the holding shaft 28a. As a result, the compression-side back pressure chamber Cc communicates with the extension-side pilot orifice Oe. Since the compression-side back pressure chamber Cc communicates with the extension-side pilot orifice Oe, the compression-side back pressure chamber Cc also communicates with the extension-side back pressure chamber Ce through the communication passage 44, which is formed in the longitudinal hole 28d of the holding shaft 28a, and the compression-side pilot orifice Oc.

Furthermore, since the compression-side guide part 31 is provided with an extension-side pressure introduction passage Ie that is opened from the outer periphery of the flange portion 31b, the extension-side chamber R1 is allowed to communicate with the compression-side back pressure chamber Cc. An annular plate 39 is stacked on the lower end of the flange portion 31b of the compression-side guide part 31 in Fig. 2, and the annular plate 39 is pushed against the flange portion 31b by a spring MVcs, which is interposed between the annular plate 39 and the spool body 37 of the compression-side spool Sc, so as to close the extension-side pressure introduction passage Ie. Meanwhile, the extension-side pressure introduction passage Ie is adapted not to apply resistance to the flow of hydraulic oil passing therethrough.

In a case where the extension-side chamber R1 is compressed and pressure is increased at the time of the extension operation of the shock absorber D, the annular plate 39 is pressed by the pressure, is separated from the flange portion 31b, and opens the extension-side pressure introduction passage Ie. Further, the annular plate 39 is pushed against the flange portion 31b and closes the extension-side pressure introduction passage Ie at the time of the contraction operation of the shock absorber D where the internal pressure of the compression-side back pressure chamber Cc is higher than that of the extension-side chamber R1. Accordingly, the annular plate 39 functions as a check valve body of a check valve Cie that allows only the flow of hydraulic oil from the extension-side chamber R1. The extension-side pressure introduction passage Ie is set to a one-way passage, which allows only the flow of hydraulic oil toward the compression-side back pressure chamber Cc from the extension-side chamber R1, by the check valve Cie.

Here, as described above, the communication passage 44 communicates with the receiving portion L through the annular groove 28e, the port 28f, and the lateral hole 28g of the holding member 28. Accordingly, the extension-side back pressure chamber Ce and the compression-side back pressure chamber Cc not only communicate with each other through the extension-side pilot orifice Oe, the compression-side pilot orifice Oc, and the communication passage 44 but also communicate with the extension-side chamber R1 through the extension-side pressure introduction passage Ie, communicate with the compression-side chamber R2 through the compression-side pressure introduction passage Ic, and communicate with the receiving portion L through the port 28f and the lateral hole 28g.

The spring MVcs plays a role in pushing the annular plate 39 against the flange portion 31b, forms the check valve Cie together with the annular plate 39 functioning as the check valve body, and also plays a role in biasing the compression-side spool Sc toward the compression-side leaf valve Vc. Even though the bending of the compression-side leaf valve Vc is canceled after the compression-side spool Sc is in a state in which the compression-side leaf valve Vc is bent and the compression-side spool Sc is away from the piston 11, that is, the compression-side spool Sc is pushed up in Fig. 2, the compression-side spool Sc immediately returns to the original position (the position illustrated in Fig. 2) while following the compression-side leaf valve Vc since the compression-side spool Sc is biased by the spring MVcs. The compression-side spool Sc can also be biased by a separate spring member. However, in a case where the compression-side spool Sc can share the spring MVcs with the check valve Cie, there are advantages that the number of components can be reduced and a structure is simplified. Meanwhile, since the outer diameter of the compression-side spool Sc is set to be larger than the inner diameter of the annular protrusion 38, the annular protrusion 38 is in contact with the compression-side leaf valve Vc. Accordingly, the compression-side spool Sc is always biased toward the compression-side leaf valve Vc by the pressure of the compression-side back pressure chamber Cc. Therefore, a spring member for biasing only the compression-side spool Sc does not need to be installed.

Further, the extension-side spool Se biases the extension-side leaf valve Ve toward the piston 11 while receiving the pressure of the extension-side back pressure chamber Ce, but the pressure-receiving area of the extension-side spool Se, which receives the pressure of the extension-side back pressure chamber Ce, corresponds to a difference between the area of a circle, which has the outer diameter of the spool body 33 of the extension-side spool Se as a diameter, and the area of a circle that has the inner diameter of the annular protrusion 34 as a diameter. Likewise, the compression-side spool Sc biases the compression-side leaf valve Vc toward the piston 11 while receiving the pressure of the compression-side back pressure chamber Cc, but the pressure-receiving area of the compression-side spool Sc, which receives the pressure of the compression-side back pressure chamber Cc, corresponds to a difference between the area of a circle, which has the outer diameter of the spool body 37 of the compression-side spool Sc as a diameter, and the area of a circle that has the inner diameter of the annular protrusion 38 as a diameter. Further, in the case of the shock absorber D of this embodiment, the pressure-receiving area of the extension-side spool Se is set to be larger than the pressure-receiving area of the compression-side spool Sc.

Since the annular protrusion 34 of the extension-side spool Se is in contact with the back surface of the extension-side leaf valve Ve and the extension-side leaf valve Ve is mounted on the outer periphery of the collar 85, the pressure-receiving area of the extension-side leaf valve Ve on which the pressure of the extension-side back pressure chamber Ce directly acts corresponds to an area obtained by excluding the area of a circle, which has the outer diameter of the collar 85 as a diameter, from the area of a circle that has the inner diameter of the annular protrusion 34 as a diameter. Accordingly, a force obtained by multiplying the pressure of the extension-side back pressure chamber Ce and an area, which is obtained by excluding the area of a circle having the outer diameter of the collar 85 as a diameter from the area of a circle having the outer diameter of the extension-side spool Se as a diameter, is used as an extension-side load; and the extension-side leaf valve Ve is biased toward the piston 11 by this extension-side load.

On the other hand, since the annular protrusion 38 of the compression-side spool Sc is in contact with the back surface of the compression-side leaf valve Vc and the compression-side leaf valve Vc is mounted on the outer periphery of the collar 81, the pressure-receiving area of the compression-side leaf valve Vc on which the pressure of the compression-side back pressure chamber Cc directly acts corresponds to an area obtained by excluding the area of a circle, which has the outer diameter of the collar 81 as a diameter, from the area of a circle that has the inner diameter of the annular protrusion 38 as a diameter. Accordingly, a force obtained by multiplying the pressure of the compression-side back pressure chamber Cc and an area, which is obtained by excluding the area of a circle having the outer diameter of the collar 81 as a diameter from the area of a circle having the outer diameter of the compression-side spool Sc as a diameter, is used as an a compression-side load; and the compression-side leaf valve Vc is biased toward the piston 11 by this compression-side load.

Accordingly, in a case where the pressure of the extension-side back pressure chamber Ce and the pressure of the compression-side back pressure chamber Cc are equal to each other, the extension-side load, which is a load applied to the extension-side leaf valve Ve from the extension-side back pressure chamber Ce, is set to be larger than the compression-side load that is a load applied to the compression-side leaf valve Vc from the compression-side back pressure chamber Cc.

Meanwhile, in a case where the extension-side back pressure chamber Ce is closed by the extension-side spool Se and the pressure of the extension-side back pressure chamber Ce does not directly act on the extension-side leaf valve Ve, the extension-side load is determined depending on only the pressure-receiving area of the extension-side spool Se that receives the pressure of the extension-side backpressure chamber Ce. Even on the compression-side likewise, in a case where the compression-side back pressure chamber Cc is closed by the compression-side spool Sc and the pressure of the compression-side back pressure chamber Cc does not directly act on the compression-side leaf valve Vc, the compression-side load is determined depending on only the pressure-receiving area of the compression-side spool Sc that receives the pressure of the compression-side back pressure chamber Cc.

Accordingly, in a case where the pressure of the extension-side back pressure chamber Ce and the pressure of the compression-side back pressure chamber Cc are equal to each other, the extension-side load, which is applied to the extension-side leaf valve Ve from the extension-side back pressure chamber Ce, has only to be set to be larger than the compression-side load, which is applied to the compression-side leaf valve Vc from the compression-side back pressure chamber Cc. Therefore, in a case where not only pressure does not directly act on the extension-side leaf valve Ve from the extension-side back pressure chamber Ce but also pressure does not directly act on the compression-side leaf valve Vc from the compression-side back pressure chamber Cc, it is sufficient to set the pressure-receiving area of the extension-side spool Se to an area larger than that pressure-receiving area of the compression-side spool Sc.

The extension-side spool Se can be in contact with the extension-side leaf valve Ve in a structure where the extension-side back pressure chamber Ce is closed by the extension-side spool Se, and the compression-side spool Sc can be in contact with the compression-side leaf valve Vc in a structure where the compression-side back pressure chamber Cc is closed by the compression-side spool Sc. It is possible to arbitrarily select whether to close the extension-side back pressure chamber Ce and the compression-side back pressure chamber Cc by the spools or not. Since the extension-side spool Se and the compression-side spool Sc having different pressure-receiving areas are used in the invention, the pressure-receiving area of the extension-side leaf valve Ve on which the pressure of the extension-side back pressure chamber Ce substantially acts can be set to be larger than the pressure-receiving area of only the extension-side leaf valve Ve. Since a difference between the pressure-receiving area of the compression-side spool Sc and the pressure-receiving area of the extension-side spool Se can be set to be large as described above, the extension-side load and the compression-side load are made to have a large difference therebetween and very high degree of freedom is given to the setting ranges of the extension-side load and the compression-side load.

Further, at the time of the extension operation of the shock absorber D, the extension-side leaf valve Ve receives pressure from the extension-side chamber R1 through the extension-side passages MPe and receives the extension-side load from the back side. When the extension-side leaf valve Ve is bent until coming into contact with the extension-side valve seat 11d since the extension-side load is larger than a force for pushing down the extension-side leaf valve Ve by the pressure of the extension-side chamber R1, the extension-side leaf valve Ve closes the extension-side passages MPe. The extension-side load, which is required when the extension-side leaf valve Ve closes the extension-side passages MPe at a certain rod retreating speed at the time of the extension operation of the shock absorber D, can be set according to the pressure-receiving area, the bending stiffness of the extension-side leaf valve Ve, or the like. Even in regard to the compression-side leaf valve Vc, as in the case of the extension-side leaf valve Ve, the compression-side load, which is required when the compression-side leaf valve Vc closes the compression-side passages MPc at a certain rod advancing speed at the time of the contraction operation of the shock absorber D, can be set according to the pressure-receiving area, the bending stiffness of the compression-side leaf valve Vc, or the like.

The extension-side back pressure chamber Ce and the compression-side back pressure chamber Cc are regarded as upstream components and the extension-side pressure discharge passage Ee and the compression-side pressure discharge passage Ec are regarded as downstream components, these components communicate with each other through the adjustment passage Pc, and the electromagnetic valve EV, which includes an on-off valve SV and a pressure control valve PV, is provided in the middle of the adjustment passage Pc, and is adapted to be capable of controlling the pressure of the extension-side back pressure chamber Ce and the compression-side back pressure chamber Cc that are regarded as upstream components. Accordingly, when the internal pressure of the extension-side backpressure chamber Ce and the internal pressure of the compression-side back pressure chamber Cc are to be controlled by the pressure control valve PV, the extension-side load can be made to be larger than the compression-side load even though the internal pressure of the extension-side back pressure chamber Ce and the internal pressure of the compression-side back pressure chamber Cc are equal to each other. Accordingly, since it is not necessary to increase the internal pressure of the extension-side back pressure chamber Ce that much in a case where a large extension-side load is required, the maximum pressure to be controlled by the pressure control valve PV can be lowered even in a case where an extension-side damping force is intended to be increased.

Meanwhile, in this embodiment, the inner periphery of the extension-side spool Se is not in sliding contact with the outer periphery of the mounting portion 32a of the extension-side guide part 32, and the pressure of the extension-side back pressure chamber Ce also acts on the inside of a portion, which is in contact with the annular protrusion 34, of the back side of the extension-side leaf valve Ve to bias the extension-side leaf valve Ve. Accordingly, when the extension-side load is to be set, the extension-side load may be set in consideration of a load for directly biasing the extension-side leaf valve Ve by the pressure of the extension-side back pressure chamber Ce. The inner periphery of the compression-side spool Sc is also not in sliding contact with the outer periphery of the mounting portion 31a of the compression-side guide part 31, and the pressure of the compression-side back pressure chamber Cc also acts on the inside of a portion, which is in contact with the annular protrusion 38, of the back side of the compression-side leaf valve Vc to bias the compression-side leaf valve Vc. Accordingly, when the compression-side load is to be set, the compression-side load may be set in consideration of a load for directly biasing the compression-side leaf valve Vc by the pressure of the compression-side back pressure chamber Cc.

Further, in this embodiment, the on-off valve SV closes the adjustment passage Pc when current does not flow in the on-off valve and opens the adjustment passage Pc when current flows in the on-off valve. Accordingly, pressure control using the pressure control valve PV can be performed. Furthermore, the fail passage FP, which bypasses the electromagnetic valve EV and is provided with the fail valve FV, is provided in the middle of the adjustment passage Pc.

As illustrated in Fig. 3, the electromagnetic valve EV includes a valve seat member 50 that includes a valve-receiving cylinder 50a and a control valve seat 50d, an electromagnetic valve body 51 that is separated from/seated on the control valve seat 50d, and a solenoid Sol that gives a thrust to the electromagnetic valve body 51 to drive the electromagnetic valve body 51 in the axial direction.

Further, the valve seat member 50 is fitted into the socket 28c of the holding member 28, and is received in the receiving portion L while the valve seat member 50 is positioned in the radial direction in a case where the valve-receiving cylinder 50a is inserted into the inner periphery of an annular valve housing 52 stacked on the upper end of the flange 28b in Fig. 3. Furthermore, the valve seat member 50 includes a bottomed cylindrical valve-receiving cylinder 50a into which the electromagnetic valve body 51 is slidably inserted, a flange 50b that is connected to the outer periphery of the upper end of the valve-receiving cylinder 50a in Fig. 3, a through-hole 50c that is opened from the side of the valve-receiving cylinder 50a and communicates with the inside of the valve-receiving cylinder 50a, an annular control valve seat 50d that protrudes in the axial direction from the upper end of the flange 50b in Fig. 3, a larger-diameter cylinder portion 50e that stands up from the outer periphery of the flange 50b and is provided with a tapered portion at the lower end thereof, and a port 50f that is opened from the tapered portion of the larger-diameter cylinder portion 50e and allows the inside and outside of the larger-diameter cylinder portion 50e to communicate with each other.

As illustrated in Fig. 3, the valve housing 52 has an annular shape, and includes an annular window 52a that is provided at the upper end in Fig. 3, a port 52b that is opened from the annular window 52a and communicates with the lower end in Fig. 3, a notch groove 52c that is opened from the inner periphery of the upper end in Fig. 3 and communicates with the port 52b, a groove 52d that is provided on the outer periphery and is provided along the axial direction, an annular fail valve seat 52e that surrounds the outer periphery of the annular window 52a, and a recessed portion 52f that is provided on the inner periphery of the upper end portion in Fig. 3 and communicates with the notch groove 52c.

In a case where the valve housing 52 is inserted into the socket 28c and is stacked on the upper end of the flange 28b in Fig. 3, the port 52b faces the opening of the port 28f, which faces the upper end of the flange 28b so that the port 52b and the notch groove 52c communicate with the port 28f, and the groove 52d faces the groove 28j of the flange 28b so that the groove 52d and the groove 28j communicate with each other.

Accordingly, the port 52b and the notch groove 52c communicate with the communication passage 44 through the annular groove 28e, the port 28f, and the lateral hole 28g, and communicate with the extension-side back pressure chamber Ce and the compression-side back pressure chamber Cc through the communication passage 44, the extension-side pilot orifice Oe, and the compression-side pilot orifice Oc. Further, the groove 52d communicates with the separator 43 through the groove 28j ; communicates with the compression-side chamber R2 through the extension-side pressure discharge passage Ee formed in the check valve Cee; and communicates with the extension-side chamber R1 through the compression-side pressure discharge passage Ec that is formed by the through-hole 29c, the recessed portion 28k, the through-hole 28m, and the check valve Cec.

The valve-receiving cylinder 50a of the cylindrical valve seat member 50 is received in the valve housing 52. Further, an annular leaf valve 53 is mounted on the outer periphery of the valve-receiving cylinder 50a of the valve seat member 50. In a case where the valve-receiving cylinder 50a is inserted into the valve housing 52 so that the valve seat member 50 is assembled with the valve housing 52, the inner periphery of the leaf valve 53 is interposed and fixed between the flange 50b of the valve seat member 50 and the inner periphery of the upper end of the valve housing 52 in Fig. 3. Furthermore, the outer peripheral portion of the leaf valve 53 is seated on the fail valve seat 52e of the valve housing 52 in a state in which initial bending is given, and closes the annular window 52a. Moreover, when the valve seat member 50 is assembled with the valve housing 52, a gap is formed between the larger-diameter cylinder portion 50e and the valve housing 52 since the tapered portion is provided on the larger-diameter cylinder portion 50e so as to be away from the valve housing 52. When pressure acting on the inside of the annular window 52a through the port 52b reaches valve-opening pressure, the leaf valve 53 is bent and opens the annular window 52a to allow the port 52b to communicate with the extension-side pressure discharge passage Ee and the compression-side pressure discharge passage Ec through the gap. The fail valve FV is formed by the leaf valve 53 and the fail valve seat 52e. When the fail valve FV is opened, the electromagnetic valve EV is bypassed through the gap and the fail valve FV allows the port 52b to directly communicate with the extension-side pressure discharge passage Ee and the compression-side pressure discharge passage Ec. Accordingly, the fail passage FP is formed by the annular window 52a and the gap in this case.

Further, in a case where the valve-receiving cylinder 50a is inserted into the valve housing 52 so that the valve seat member 50 is assembled with the valve housing 52, the recessed portion 52f of the valve housing 52 faces the through-hole 50c of the valve-receiving cylinder 50a. Accordingly, the extension-side back pressure chamber Ce and the compression-side back pressure chamber Cc communicate with the valve-receiving cylinder 50a through the port 52b.

Furthermore, the solenoid Sol to be received in the electromagnetic valve-receiving cylinder 29 is disposed on the upper side of the larger-diameter cylinder portion 50e of the valve seat member 50 in Fig. 3. Accordingly, in a case where the holding member 28 is screwed to the electromagnetic valve-receiving cylinder 29 so as to be integrated with the electromagnetic valve-receiving cylinder 29, the valve housing 52, the leaf valve 53, the valve seat member 50, and the solenoid Sol are interposed and fixed between the electromagnetic valve-receiving cylinder 29 and the holding member 28.

The solenoid Sol includes : a topped cylindrical mold stator 56 in which a winding wire 57 and the harness H allowing current to flow in the winding wire 57 are integrated using a mold resin; a first stationary core 58 that has a topped cylindrical shape and is fitted to the inner periphery of the mold stator 56; an annular second stationary core 59 that is stacked on the lower end of the mold stator 56 in Fig. 3; a filler ring 60 that is interposed between the first stationary core 58 and the second stationary core 59 and forms a magnetic gap, a cylindrical movable core 61 that is disposed on the inner peripheral side of the first and second stationary cores 58 and 59 so as to be movable in the axial direction; and a shaft 62 that is fixed to the inner periphery of the movable core 61. Further, when current flows in the winding wire 57, the solenoid Sol attracts the movable core 61 and gives a thrust, which is applied downward in the Fig. 3, to the shaft 62.

Furthermore, the electromagnetic valve body 51 is slidably inserted into the valve seat member 50. In detail, the electromagnetic valve body 51 includes: a small-diameter portion 51a that is slidably inserted into the valve-receiving cylinder 50a of the valve seat member 50; a large-diameter portion 51b that is provided on the upper side of the small-diameter portion 51a in Fig. 3, that is, the side opposite to the valve seat member and is not inserted into the valve-receiving cylinder 50a; an annular recessed portion 51c that is provided between the small-diameter portion 51a and the large-diameter portion 51b; a flange-like spring-receiving portion 51d that is provided on the outer periphery of an end of the large-diameter portion 51b opposite to the valve seat member; a connecting passage 51e that passes through the electromagnetic valve body 51 from the front end of the electromagnetic valve body 51 toward the rear end thereof; and an orifice 51f that is provided in the middle of the connecting passage 51e.

Further, in the electromagnetic valve body 51, as described above, the outer diameter of a portion of the electromagnetic valve body 51 opposite to the valve seat member from the recessed portion 51c is set to be larger than the outer diameter of the small-diameter portion 51a so that the large-diameter portion 51b is formed. The electromagnetic valve body 51 includes a seat portion 51g, which faces the control valve seat 50d, at the lower end of the large-diameter portion 51b in Fig. 3. Accordingly, when the electromagnetic valve body 51 is moved with respect to the valve seat member 50 in the axial direction, the seat portion 51g is adapted to be separated from/seated on the control valve seat 50d.

Furthermore, a spring EVs, which biases the electromagnetic valve body 51 in a direction where the electromagnetic valve body 51 is away from the valve seat member 50, is interposed between the flange 50b of the valve seat member 50 and the spring-receiving portion 51d; and the solenoid Sol, which exerts a thrust against the biasing force of the spring EVs, is provided. Accordingly, since the electromagnetic valve body 51 is always biased by the spring EVs in a direction where the electromagnetic valve body 51 is away from the valve seat member 50, the electromagnetic valve body 51 is positioned to a position where the electromagnetic valve body 51 is the furthest away from the valve seat member 50 in a case where a thrust the against the spring EVs generated from the solenoid Sol does not act on the electromagnetic valve body 51. Meanwhile, in this case, the spring EVs is used to bias the electromagnetic valve body 51 in a direction where the electromagnetic valve body 51 is away from the valve seat member 50, but an elastic body, which can exert a biasing force, other than the spring EVs can be used. Further, since a biasing force for pushing the electromagnetic valve body 51 against the valve seat member 50 is adjusted in a case where the thrust of the solenoid Sol is adjusted, valve-opening pressure where the seat portion 51g is separated from the control valve seat 50d is controlled. Accordingly, the seat portion 51g of the electromagnetic valve body 51, the control valve seat 50d of the valve seat member 50, and the solenoid Sol form the pressure control valve PV.

Furthermore, when the electromagnetic valve body 51 is the furthest away from the valve seat member 50, the electromagnetic valve body 51 allows the small-diameter portion 51a to face the through-hole 50c and closes the through-hole 50c. When current flows in the solenoid Sol and the electromagnetic valve body 51 is moved toward the valve seat member from a position where the electromagnetic valve body 51 is the furthest away from the valve seat member 50 by a predetermined distance, the electromagnetic valve body 51 allows the recessed portion 51c to always face the through-hole 50c and opens the through-hole 50c. That is, the electromagnetic valve body 51 is adapted to be capable of opening and closing the through-hole 50c of the valve seat member 50, so that the on-off valve SV is formed. Accordingly, the valve seat member 50, the electromagnetic valve body 51, and the solenoid Sol form the electromagnetic valve EV in which the on-off valve SV and the pressure control valve PV are integrated with each other.

When the electromagnetic valve body 51 opens the through-hole 50c and the seat portion 51g is separated from the control valve seat 50d, the through-hole 50c communicates with the extension-side pressure discharge passage Ee and the compression-side pressure discharge passage Ec through the recessed portion 51c of the electromagnetic valve body 51, the port 50f, and the gap formed between the valve seat member 50 and the valve housing 52.

In a case where the thrust of the solenoid Sol is adjusted as described above when current can be normally supplied to the solenoid Sol and the on-off valve SV is in an open state, a force for biasing the electromagnetic valve body 51 toward the valve seat member 50 can be adjusted. In more detail, when a force for pushing the electromagnetic valve body 51 up in Fig. 3, which is generated by the action of pressure on the upstream side of the pressure control valve PV and the spring EVs, is larger than a force for pushing down the electromagnetic valve body 51 that is generated by the solenoid Sol, the pressure control valve PV is opened and pressure on the upstream side of the pressure control valve PV can be controlled according to the thrust of the solenoid Sol. Further, since the upstream portion of the pressure control valve PV communicates with the extension-side back pressure chamber Ce and the compression-side back pressure chamber Cc through the adjustment passage Pc, the pressure of the extension-side back pressure chamber Ce and the pressure of the compression-side back pressure chamber Cc can be simultaneously controlled by the pressure control valve PV. Furthermore, the downstream portion of the electromagnetic valve EV communicates with the extension-side pressure discharge passage Ee and the compression-side pressure discharge passage Ec, and hydraulic oil having passed through the electromagnetic valve EV is discharged to the compression-side chamber R2 on the low-pressure side at the time of the extension operation of the shock absorber D and is discharged to the extension-side chamber R1 on the low-pressure side at the time of the contraction operation of the shock absorber D. Accordingly, the annular groove 28e, the port 28f, the lateral hole 28g, the port 52b, the notch groove 52c, the recessed portion 52f, a part of the receiving portion L, the gap, and the groove 52d form the adjustment passage Pc.

Further, the on-off valve SV includes a shut-off position where the through-hole 50c of the valve seat member 50 is closed by the small-diameter portion 51a of the electromagnetic valve body 51 at the time of fail where current does not flow in the solenoid Sol. The fail passage FP is adapted to bypass the electromagnetic valve EV, and the fail valve FV provided in the middle of the fail passage FP opens and closes the annular window 52a that communicates with the port 52b. Furthermore, the valve-opening pressure of the fail valve FV is set to pressure higher than the upper limit pressure that can be controlled by the pressure control valve PV. Accordingly, in a case where pressure on the upstream side of the pressure control valve PV is higher than the upper limit pressure that can be controlled, the fail valve FV is opened so that the pressure of the extension-side back pressure chamber Ce and the pressure of the compression-side back pressure chamber Cc can be controlled to the valve-opening pressure of the fail valve FV.

Accordingly, in a case where the on-off valve SV takes a shut-off position at the time of fail, the pressure of the extension-side back pressure chamber Ce and the pressure of the compression-side back pressure chamber Cc are controlled by the fail valve FV.

In addition, when the electromagnetic valve body 51 is inserted into the valve-receiving cylinder 50a of the valve seat member 50, a space K is formed on the front end side of the through-hole 50c in the valve-receiving cylinder 50a. This space K communicates with the outside of the electromagnetic valve body through the connecting passage 51e and the orifice 51f of the electromagnetic valve body 51. Accordingly, in a case where the electromagnetic valve body 51 is moved with respect to the valve seat member 50 in the axial direction, which is the up-down direction in Fig. 3, the space K functions as a dashpot and can suppress the sudden displacement of the electromagnetic valve body 51 and the vibration movement of the electromagnetic valve body 51.

Subsequently, the operation of the shock absorber D will be described. First, a case where the damping force characteristics of the shock absorber D are to be made soft, that is, a biasing force for biasing the extension-side leaf valve Ve, which is caused by the pressure of the extension-side back pressure chamber Ce, and a biasing force for biasing the compression-side leaf valve Vc, which is caused by the pressure of the compression-side back pressure chamber Cc, are reduced to make a damping coefficient low will be described. To make the damping force characteristics soft, current is made to flow in the solenoid Sol to reduce resistance, which is applied to hydraulic oil passing through the electromagnetic valve EV by the electromagnetic valve EV, and the biasing forces are controlled so that the extension-side leaf valve Ve and the compression-side leaf valve Vc are not seated on the extension-side valve seat 11d and the compression-side valve seat 11c, respectively.

In this state, even though the extension-side leaf valve Ve is bent by the biasing force, the extension-side leaf valve Ve is not seated on the extension-side valve seat 11d and a gap is formed between the extension-side leaf valve Ve and the extension-side valve seat 11d. Likewise even in the case of the compression-side leaf valve Vc, even though the compression-side leaf valve Vc is bent by the biasing force, the compression-side leaf valve Vc is not seated on the compression-side valve seat 11c and a gap is formed between the compression-side leaf valve Vc and the compression-side valve seat 11c.

In a case where the shock absorber D extends and the piston 11 is moved up in Fig. 1 in this state, hydraulic oil pushes and bends the extension-side leaf valve Ve toward the compression-side chamber R2 to be expanded from the extension-side chamber R1 to be compressed and moves through the extension-side passages MPe. In this case, since a gap is formed between the extension-side leaf valve Ve and the extension-side valve seat 11d, a damping force, which is smaller than the damping force to be exerted in a case where the extension-side leaf valve Ve is seated on the extension-side valve seat 11d, can be exerted.

Further, when the shock absorber D is to extend, hydraulic oil present in the extension-side chamber R1 pushes and opens the check valve Cie, passes through the extension-side pressure introduction passage Ie, and flows to the adjustment passage Pc. The hydraulic oil having passed through the adjustment passage Pc pushes and opens the check valve Cee, and is discharged to the compression-side chamber R2 on the low-pressure side through the extension-side pressure discharge passage Ee. Meanwhile, since the extension-side pilot orifice Oe applies resistance and causes a pressure loss while the hydraulic oil passes through the extension-side pilot orifice Oe, pressure on the downstream side of the adjustment passage Pc in a state in which the hydraulic oil flows becomes lower than the pressure of the extension-side chamber R1. Accordingly, the check valve Cec provided on the compression-side pressure discharge passage Ec is closed without being opened.

The extension-side pressure introduction passage Ie not only communicates with the compression-side back pressure chamber Cc but also communicates with the extension-side back pressure chamber Ce through the communication passage 44. However, since the compression-side pressure introduction passage Ic is closed by the check valve Cic, the internal pressure of the extension-side back pressure chamber Ce can be made higher than the internal pressure of the compression-side chamber R2 at the time of the extension operation of the shock absorber D. Meanwhile, since the pressure of the compression-side back pressure chamber Cc becomes higher than the pressure of the compression-side chamber R2 on the low-pressure side but merely biases the compression-side leaf valve Vc that closes the compression-side passages MPc in which the flow of hydraulic oil is not generated, there is no inconvenience.

The adjustment passage Pc is provided with the electromagnetic valve EV including the pressure control valve PV as described above. Accordingly, in a case where current flows in the solenoid Sol to control pressure on the upstream side of the adjustment passage Pc by the pressure control valve PV, it is possible to control the extension-side load to a desired load by adjusting the internal pressure of the extension-side back pressure chamber Ce. Accordingly, since the opening of the extension-side leaf valve Ve can be controlled by the pressure control valve PV as described above, the extension-side damping force at the time of the extension operation of the shock absorber D can be controlled.

Conversely, in a case where the shock absorber D contracts and the piston 11 is moved down in Fig. 1, hydraulic oil pushes and bends the compression-side leaf valve Vc toward the extension-side chamber R1 to be expanded from the compression-side chamber R2 to be compressed and moves through the compression-side passages MPc. Since a gap is formed between the compression-side leaf valve Vc and the compression-side valve seat 11c, the area of the flow passage, which is larger than the area of the flow passage to be obtained in a case where the compression-side leaf valve Vc is seated on the compression-side valve seat 11c, is ensured.

Further, hydraulic oil present in the compression-side chamber R2 pushes and opens the check valve Cic, passes through the compression-side pressure introduction passage Ic, and flows to the adjustment passage Pc. The hydraulic oil having passed through the adjustment passage Pc pushes and opens the check valve Cec, and is discharged to the extension-side chamber R1 on the low-pressure side through the compression-side pressure discharge passage Ec. Meanwhile, since the compression-side pilot orifice Oc applies resistance and causes a pressure loss while the hydraulic oil passes through the compression-side pilot orifice Oc, pressure on the downstream side of the adjustment passage Pc in a state in which the hydraulic oil flows becomes lower than the pressure of the compression-side chamber R2. Accordingly, the check valve Cee provided on the extension-side pressure discharge passage Ee is closed without being opened.

The compression-side pressure introduction passage Ic not only communicates with the extension-side back pressure chamber Ce but also communicates with the compression-side back pressure chamber Cc through the communication passage 44. However, since the extension-side pressure introduction passage Ie is closed by the check valve Cie, the internal pressure of the compression-side back pressure chamber Cc can be made higher than the internal pressure of the extension-side chamber R1 at the time of the contraction operation of the shock absorber D. Meanwhile, since the pressure of the extension-side backpressure chamber Ce becomes higher than the pressure of the extension-side chamber R1 on the low-pressure side but merely biases the extension-side leaf valve Ve that closes the extension-side passages MPe in which the flow of hydraulic oil is not generated, there is no inconvenience.

The adjustment passage Pc is provided with the electromagnetic valve EV as described above. Accordingly, in a case where current flows in the solenoid Sol of the electromagnetic valve EV to control pressure on the upstream side of the adjustment passage Pc, it is possible to control the compression-side load to a desired load by adjusting the internal pressure of the compression-side back pressure chamber Cc. Since the opening of the compression-side leaf valve Vc can be controlled by the electromagnetic valve EV as described above, the compression-side damping force at the time of the contraction operation of the shock absorber D can be controlled.

Subsequently, a case where the damping force characteristics of the shock absorber D are to be made hard, that is, a biasing force for biasing the extension-side leaf valve Ve and a biasing force for biasing the compression-side leaf valve Vc are increased to make a damping coefficient high will be described. To make the damping force characteristics hard, current is made to flow in the solenoid Sol to increase resistance, which is applied to hydraulic oil passing through the electromagnetic valve EV by the electromagnetic valve EV, and the biasing forces are controlled so that the extension-side leaf valve Ve and the compression-side leaf valve Vc are seated on the extension-side valve seat 11d and the compression-side valve seat 11c, respectively.

In this state, the extension-side leaf valve Ve is bent by the biasing force and is seated on the extension-side valve seat 11d and a gap is not formed between the extension-side leaf valve Ve and the extension-side valve seat 11d. Likewise even in the case of the compression-side leaf valve Vc, the compression-side leaf valve Vc is bent by the biasing force and is seated on the compression-side valve seat 11c and a gap is not formed between the compression-side leaf valve Vc and the compression-side valve seat 11c.

In a case where the shock absorber D extends and the piston 11 is moved up in Fig. 1 in this state, hydraulic oil pushes and bends the extension-side leaf valve Ve toward the compression-side chamber R2 to be expanded from the extension-side chamber R1 to be compressed and moves through the extension-side passages MPe. In this case, since a gap is not formed between the extension-side leaf valve Ve and the extension-side valve seat 11d, a damping force, which is larger than the damping force to be exerted in a case where a gap is formed between the extension-side leaf valve Ve and the extension-side valve seat 11d, can be exerted.

Further, when the shock absorber D is to extend, hydraulic oil present in the extension-side chamber R1 pushes and opens the check valve Cie, passes through the extension-side pressure introduction passage Ie, and also flows in the adjustment passage Pc as in a case where the damping force characteristics are to be made soft. In a case where pressure on the upstream side of the adjustment passage Pc is controlled by the pressure control valve PV provided on the adjustment passage Pc, it is possible to control the extension-side load to a desired load by adjusting the internal pressure of the extension-side backpressure chamber Ce as in a case where the damping force characteristics are to be made soft. Accordingly, since the opening of the extension-side leaf valve Ve is controlled, the extension-side damping force at the time of the extension operation of the shock absorber D is controlled even in a case where the damping force characteristics are to be made hard.

Next, in a case where the shock absorber D contracts and the piston 11 is moved down in Fig. 1, hydraulic oil pushes and bends the compression-side leaf valve Vc toward the extension-side chamber R1 to be expanded from the compression-side chamber R2 to be compressed and moves through the compression-side passages MPc. In this case, since a gap is not formed between the compression-side leaf valve Vc and the compression-side valve seat 11c, a damping force, which is larger than the damping force to be exerted in a case where a gap is formed between the compression-side leaf valve Vc and the compression-side valve seat 11c, can be exerted.

Hydraulic oil present in the compression-side chamber R2 pushes and opens the check valve Cic, passes through the compression-side pressure introduction passage Ic, and also flows in the adjustment passage Pc as in a case where the damping force characteristics are to be made soft. In a case where pressure on the upstream side of the adjustment passage Pc is controlled by the pressure control valve PV provided on the adjustment passage Pc, it is possible to control the compression-side load to a desired load by adjusting the internal pressure of the compression-side back pressure chamber Cc as in a case where the damping force characteristics are to be made soft. Accordingly, since the opening of the compression-side leaf valve Vc is controlled, the compression-side damping force at the time of the contraction operation of the shock absorber D is controlled even in a case where the damping force characteristics are to be made hard.

In the damping force-adjusting valve V according to this embodiment, the sustaining portions 70, which suppress the deformation of the compression-side leaf valve Vc, are provided in the annular window 11e between the inner peripheral seat portion 11f and the compression-side valve seat 11c, and the upper end of the sustaining portion 70 in Fig. 3, which is an end of the sustaining portion 70 facing the compression-side leaf valve Vc, more protrudes toward the compression-side leaf valve Vc than an upper end of the compression-side valve seat 11c in Fig. 3 that is an end of the compression-side valve seat 11c facing the compression-side leaf valve Vc when seen in the axial direction.

Here, in a case where damping force characteristics of a normal shock absorber are switched to a hard damping force from a soft damping force at the time of the contraction operation, the compression-side leaf valve is biased toward the piston by the internal pressure of the compression-side back pressure chamber, which has suddenly risen, and is vigorously seated on the compression-side valve seat. Accordingly, the damping force characteristics of the shock absorber are suddenly changed.

However, according to the structure of this embodiment, the height of the sustaining portion 70 in the axial direction is set to be larger than the height of the compression-side valve seat 11c in the axial direction. For this reason, since the compression-side leaf valve Vc comes into contact with the sustaining portion 70 before being seated on the compression-side valve seat 11c, the stiffness of the compression-side leaf valve Vc is increased before the compression-side leaf valve Vc is seated on the compression-side valve seat 11c. Accordingly, a sudden change in the damping force characteristics of the damping force-adjusting valve V can be suppressed. Accordingly, since a change in damping force characteristics is smoothened, the ride quality of a vehicle on which the shock absorber D including the damping force-adjusting valve V is mounted can be improved and abnormal noise generated due to the vibration of a vehicle body caused by a sudden change in a damping force can be prevented.

Further, in this embodiment, the compression-side leaf valve Vc is seated on the compression-side valve seat 11c after coming into contact with the sustaining portions 70. Accordingly, since a force, which allows the compression-side leaf valve Vc to be seated on the compression-side valve seat 11c, can be made smaller than that in a case where the sustaining portions 70 are not provided, the generation of abnormal noise caused by the contact noise of the leaf valve can be suppressed.

Further, the height of the sustaining portion 70 according to this embodiment in the axial direction is set to be smaller than the height of the inner peripheral seat portion 11f in the axial direction. That is, in the piston 11 according to this embodiment, a height in the axial direction is reduced in the order of the inner peripheral seat portion 11f, the sustaining portion 70, and the compression-side valve seat 11c. Accordingly, since the compression-side leaf valve Vc is gently deformed so as to be gradually moved down toward the outer peripheral side from the inner peripheral side in a case where the compression-side leaf valve Vc is to be seated on the compression-side valve seat 11c, an unnecessary load is not applied to the compression-side leaf valve Vc. Therefore, according to the above-mentioned structure, the compression-side leaf valve Vc can exert a preset damping force on the hydraulic oil that passes through the compression-side passages MPc.

Furthermore, in this embodiment, it is sufficient to set the height of the sustaining portion, which prevents the breakage of a damping force-adjusting valve in the related art, in the axial direction to a height larger than the height of the valve seat in the axial direction. Accordingly, unnecessary members do not need to be added.

Meanwhile, the sustaining portions 70 are provided in only the annular window 11e of the piston 11 facing the compression-side leaf valve in this embodiment, but may be provided in an annular window 11g facing the extension-side leaf valve. In this case, the same effect as the effect obtained at the time of the contraction of the shock absorber D are exerted at the time of the extension of the shock absorber D.

Meanwhile, the piston 11 has been used as a valve disc and the damping force-adjusting valve V has been provided on the piston part of the shock absorber D in this embodiment, but the damping force-adjusting valve V of the invention may not be provided on the piston part. For example, a passage, which allows the extension-side chamber R1 and the compression-side chamber R2 to communicate with each other, maybe provided outside the cylinder 10, and the damping force-adjusting valve V may be provided in the middle of the passage. Alternatively, a separate container including the damping force-adjusting valve V may be provided and the extension-side chamber R1 and the compression-side chamber R2 may communicate with each other through the container.

The preferred embodiments of the invention have been described in detail above, but the invention can be altered, modified, and changed as long as not departing from the scope of claims.

Priority is claimed to Japanese Patent Application No. 2016-088905, filed April 27, 2016, the entire content of each of which is incorporated herein by reference.

## Claims

1. A damping force-adjusting valve comprising:
a valve disc that includes an annular valve seat, an annular inner peripheral seat portion provided on an inner peripheral side of the valve seat, an annular window provided between an inner periphery of the valve seat and the inner peripheral seat portion, and a passage opened to the annular window;
an annular leaf valve that is stacked on the inner peripheral seat portion and is separated from/seated on the valve seat;
a back pressure chamber-forming member in which a back pressure chamber for biasing the leaf valve toward the valve seat by internal pressure thereof is formed; and
a sustaining portion that is provided between the inner peripheral seat portion and the valve seat of the valve disc and suppresses deformation of the leaf valve,
wherein an end of the sustaining portion facing the leaf valve more protrudes toward the leaf valve than an end of the valve seat facing the leaf valve when seen in an axial direction.

2. The damping force-adjusting valve according to claim 1,
wherein the height of the sustaining portion in the axial direction is set to be larger than the height of the valve seat in the axial direction and smaller than the height of the inner peripheral seat portion in the axial direction.

3. The damping force-adjusting valve according to claim 1,
wherein the back pressure chamber-forming member includes a spool and a guide part that guides the movement of the spool in the axial direction, and
the back pressure chamber is formed between the guide part and the spool or in a chamber that is surrounded by the guide part, the spool, and the leaf valve.

4. A shock absorber comprising:
a cylinder;
a rod that is movably inserted into the cylinder; and
the damping force-adjusting valve according to claim 1 that is provided at one end of the rod.
